# EUROPEAN PATENT APPLICATION

(11) **EP 4 755 516 A1**
(43) Date of publication of application: **10.06.2026**
(21) Application number: 24217231.0
(22) Date of filing: 03.12.2024
(51) Int. Cl.: B04B 9/00, B04B 1/08, B04B 1/10, B04B 15/00, F01M 11/04, F16N 31/00

(54) **AN OIL DRAIN ASSEMBLY FOR DRAINING LUBRICATING OIL FROM A CENTRIFUGAL SEPARATOR**

(71) Applicant: Alfa Laval Corporate AB, 221 00 Lund (SE)
(72) Inventor: HILDING, Klas, 138 39 ÄLTA (SE); ASPLUND, Daniel, 141 30 HUDDINGE (SE)
(74) Representative: Alfa Laval Attorneys

(57) **Abstract**

The present invention provides an oil drain assembly (1) for draining lubricating oil from a centrifugal separator (2), comprising a centrifugal separator (2) comprising a drive motor (14); wherein said drive motor (14) comprises a drain hole (41) for lubricating oil; a container (20) for storing drained lubricating oil comprising an oil inlet (21); and a connecting portion (25) comprising a first end (26) adapted for connection to the drain hole (41) of said drive motor (14); a second end (27) adapted for being directly connected to the oil inlet (21) of the container (20) and a valve member (28) arranged between the first (26) and second (27) end (27) for regulating the flow of lubricating oil within said connecting portion (25). The connecting portion (25) is arranged for being permanently connected to said drain hole (41) and directly connected to said container (20).

## Description

### Technical field

The present inventive concept relates to the field of centrifugal separators, and more specifically, to the drive motor of a centrifugal separator.

### Background

Centrifugal separators, such as decanter centrifuges and high-speed centrifugal separators are generally used for separation of liquids and/or solids from a liquid mixture. Due to the centrifugal forces experienced within the separator, different fractions or phases may be separated and collected at different outlets.

A centrifugal separators is driven by a drive motor. This may be directly connected to the rotating portion of the separator or connected by any suitable transmission means, such as a worm gear, drive belts or the like. Lubricating oil used in the drive motor needs to be exchanged now and then, such as after a certain amount of operating hours. However, such an oil exchange may be practically difficult. Often a tray is found and placed under the drain hole of the separator, resulting in a time-consuming exercise and no real use of the drained oil.

Thus, there is a need in the art for improved solutions for draining lubricating oil that are used in the drive motor of a centrifugal separator.

### Summary

It is an object of the invention to at least partly overcome one or more limitations of the prior art. In particular, it is an object to provide an improved oil drain assembly for a centrifugal separator and a method for draining oil from a centrifugal separator that is practically useful and allows for recycling the drained oil.

As a first aspect of the invention, there is provided an oil drain assembly for draining lubricating oil from a centrifugal separator. The oil drain assembly is comprising
- a centrifugal separator comprising a drive motor; wherein
   the drive motor comprises a drain hole for lubricating oil;
- a container for storing drained lubricating oil comprising an oil inlet; and
- a connecting portion comprising a first end adapted for connection to the drain hole of the drive motor; a second end adapted for being directly connected to the oil inlet of the container and a valve member arranged between the first and second end for regulating the flow of lubricating oil within the connecting portion,
wherein the connecting portion is arranged for being permanently connected to the drain hole and directly connected to the container.

The first aspect of the invention is based on the insight that using a connecting portion that is permanently connected to the drain hole of the drive motor allows for replacing e.g. a drain plug of the drive motor with the connecting portion, thus introducing a valve that facilitates the actual draining process. Further, with a container that is directly connected to the connecting portion, lubricating oil may be drained from centrifugal separators having their drain holes at a low height, without any further connections than the permanently mounted connecting portion.

The drive motor may be any suitable motor arranged for rotating the rotatable portion of the centrifugal separator. As an example, the drive motor may use a gear drive using gears to transmit power from motor to the rotating portion of the separator. The drive motor may use a belt drive that uses belts connecting the motor to the rotating portion. The drive motor may also be a direct drive, in which the motor is directly connected to the rotating portion of the separator without intermediate components.

The drive motor is lubricated with a lubrication system comprising the lubricating oil that is drained utilizing the oil drain assembly of the present invention. The lubricating system may be connected to an oil tank, or an oil reservoir, for storing the lubricating oil. The lubricating oil may then be circulated to moving parts of the drive motor and back to the oil tank. Over time, the oil gets contaminated and thus needs to be drained. Therefore, the drain hole of the drive motor may be connected to the oil tank.

The container is used for collecting and storing the drained lubricating oil. According to embodiments, the container is a flexible bag. This facilitates placing the container at the drain hole in a separator installation that usually contains a lot of pipes and cables. Further, storage of excess bags close to the separator is provided, so that they are easily accessed when oil needs to be drained.

The flexible bag may be in the form of a stand-up pouch. These bags are flexible spouted packages the may stand on a shelf or on the ground without external support. This thus facilitates leaving the container during the oil drainage, i.e. the operator does not have to be present when draining the oil. Hence, oil may be drained from the drive motor un-attended. Further, the stand-up pouch may easily be stored after collection of the lubricating oil.

Moreover, the container may be a transparent container. This facilitates visual inspection of the drained oil, and also a general classification of the type of oil. This in turn provides for a simplified recycling and possible cleaning of the drained lubricating oil.

As an addition or a complement, the container - such as the stand-up pouch - may have a sticker note or the like for adding information of the type of oil present in and/or containing instructions to the operator on how to handle and/or recycle the drained oil. This thus facilitates the overall recycling process.

The container further comprises an oil inlet. The container may have a single inlet for the drained oil. This inlet may further be used as an oil outlet if oil is to be emptied from the container. The inlet may provide the only access to the interior of the container.

In embodiments, the oil inlet is a threaded inlet. This provides for direct connection to the connecting portion that is mounted to the drain hole.

Furthermore, the container volume may be matched to the amount of lubricating oil usually present in the centrifugal separator. Depending on the drive motor, the amount of lubricating oil may vary e.g. between 2-15 litres, and the container may have a volume that is adapted to the volume of the lubricating oil, including some safety margin.

Thus, in embodiments, the drain hole of the drive motor is connected to an oil tank of the drive motor; the oil tank having a volume of V1, and wherein the volume of the container has a volume of V2, wherein V2 is between V1 and 1.5*V1.

Using containers adapted to the volume that is to be drained facilitates transport and recycling of the filled container. Further, a single container may be used for the oil from one drive motor only, thus containing a single type of lubricating oil. This further provides for better cleaning and separation of contaminants in a posttreatment process of the oil. This is this in contrast to present recycling solutions in which large tanks, often with a size of several cubic meters, of lubricating oils are drained. Such solutions require piping to the tank and has the drawback of mixing of oils of different types and contaminants etc. in the same large tank. Thus, the present invention provides for collection of lubricating oil from relatively small drive units or oil tanks.

According to embodiments, the drain hole is arranged less than 1.0 m above the ground level on which the centrifugal separator is arranged to operate.

In such examples, it may be an advantage to use the solution of the present invention, since the container may be mounted directly to the drain hole at a rather low level, i.e. where there is no space for e.g. any long connecting portions, such as tubes etc.

The connecting portion of the oil drain assembly is arranged for being permanently mounted to the oil drain hole, e.g. replacing any existing drain plug.

For this, the connecting portion comprises a first end that is adapted for connection to the drain hole of the drive motor. The first end may thus be threaded and screwed on to the oil drain hole or be connected via e.g. a pressed connection or a compression fitting.

The connection portion further comprises a second end for being directly connected to the oil inlet of the container. In embodiments, the oil inlet is a threaded inlet, and the connecting portion comprises a coupling nut at the second end for engaging with the threaded inlet.

The coupling nut may have a threaded inner surface for engaging with the threads of the oil inlet. The outer surface of the coupling nut may be arranged to engage with e.g. a wrench or any other fastening tool. As an alternative, the outside surface of the coupling nut may have a structure suitable for tightening the coupling nut using hands only.

The connecting portion further comprises a valve member arranged between the first and second ends. This valve member is used for regulating the flow of lubricating oil within the connecting portion, i.e. for regulating the flow from the first end to the second end. The valve member is designed so that it may completely closed, i.e. stopping the flow of oil within the connecting portion.

In embodiments, the valve member comprises a ball valve. Such ball valve may have a handle coupled via a stem to a rotary ball. The rotary ball may have a hole through its centre for controlling the flow of the drained lubricating oil.

Since the connecting portion is arranged to be permanently connected or mounted to the drive motor, thus mounted after oil drainage is complete and during further use of the centrifugal separator, the whole connecting portion may be arranged to extend less than 10 cm from the drain hole, such as less than 5 cm from the drain hole.

The centrifugal separator may be a decanter centrifuge or a high-speed centrifugal separator.

A decanter centrifuge is used in a variety of applications for separating a feed consisting of a solid-liquid mixture into light phase (liquids) and heavy phase (solids) components. Decanter centrifuges include a rotatable bowl and a helically formed, metal screw conveyor rotatable on a common axis. The feed is typically injected at the centre of the decanter centrifuge and separated into the heavy phase and the light phase which are ejected at opposite large and conical ends of the bowl, respectively. The light phase is accumulated near the axis and ejected at the large end whereas the heavy phase is accumulating at the inner surface of the bowl wall and conveyed to an outlet at the conical end by the helically formed, metal screw conveyor rotating at a speed slightly different from the rotational speed of the bowl.

A high-speed centrifugal separator comprises a centrifuge bowl in which the separation takes place. This rotates at a high speed, such as several thousands of rpm. Usually, the centrifuge bowl comprises a separation aid in the form of a stack of separation discs or axial separation blades. Such stack of separation discs may be a frustoconical stack of separation discs, as known in the art. The high-speed centrifugal separator may be arranged for separating the liquid mixture into one or two liquid phases, such as a liquid light phase and/or a liquid heavy phase, in which the liquid heavy phase has a density that is higher than the liquid light phase. In addition also a solids phase may be separated. This solid phase may be continuously ejected from the periphery of the centrifuge bowl or be intermittently discharged through openable outlets at the periphery of the centrifuge bowl. The high-speed centrifugal separator may be for continuous separation of a liquid feed mixture, in which the liquid mixture is fed continuously to the separator.

As a second aspect of the invention, there is provided a method for draining lubricating oil comprising the steps of
a) providing an oil drain assembly according to the first aspect above;
b) mounting the first end (26) of the connecting portion to the drain hole of the drive motor;
c) mounting the second end of the connecting portion to the oil inlet of the container;
d) allowing oil to be drained from the drive motor to the container;
e) removing the container from the connecting portion; and
f) leaving the connecting portion mounted to the drain hole during further use of the centrifugal separator.

The terms and definitions used in connection with the second aspect are as defined in the first aspect above. Thus, the method of the first aspect is a method for draining lubricating oil using the oil drain assembly as discussed herein above. Therefore, the advantages discussed in the different embodiments in relation to the first aspect are also present in the method of the second aspect.

In embodiments of the second aspect, step d) of allowing oil to be drained from the drive motor to the container comprises operating the valve member to a closed state during the mounting of step c), to an open state while draining oil in step d) and back to a closed state before the step of removing in step e).

In embodiments of the second aspect, step a) of providing an oil drain assembly further comprises removing an oil plug covering the drain hole of the drive motor.

In embodiments of the second aspect, the method is further comprising a step g) of separating contaminants from the oil drained to the container in a centrifugal separator.

Since the present invention allows for draining the lubricating oil into separate containers that are easy to store and transport, subsequent cleaning of the oil is facilitated. Thus, a single container may contain one type of drained lubricating oil, which makes it easier to clean using e.g. a centrifugal separator, such as high-speed centrifugal separator having a disc-stack.

It is further to be understood that inventive concept does not have to be limited to the first and second aspects above, but instead may be applied to other types of apparatuses than centrifugal separator.

As an example, the oil drain assembly of the first and second aspects may for example comprise a machine tool, i.e. the oil drain assembly may comprise an apparatus comprising a drive motor and be selected from a machine tool, a decanter centrifuge, and a high-speed centrifugal separator.

A machine tool is a stationary, power-driven machine used to shape or form parts made of metal or other material. Machine tools may include devices like lathes, milling machines, grinders, and drill presses.

### Brief description of the drawings

The above, as well as additional objects, features, and advantages of the present inventive concept, will be better understood through the following illustrative and non-limiting detailed description, with reference to the appended drawings. In the drawings like reference numerals will be used for like elements unless stated otherwise.
Fig. 1 is a schematic view of a prior art embodiment on how lubricating oil is drained from a drive motor of a centrifugal separator.
Fig. 2 is a schematic view of an embodiment of an oil drain assembly according to the present disclosure.
Fig. 3 is a schematic view of an embodiment of the container of an oil drain assembly.
Fig. 4 is a schematic view of an embodiment of the connecting portion of an oil drain assembly.
Fig. 5 is a schematic view of the process steps in an embodiment of the method for draining lubricating oil.

### Detailed description

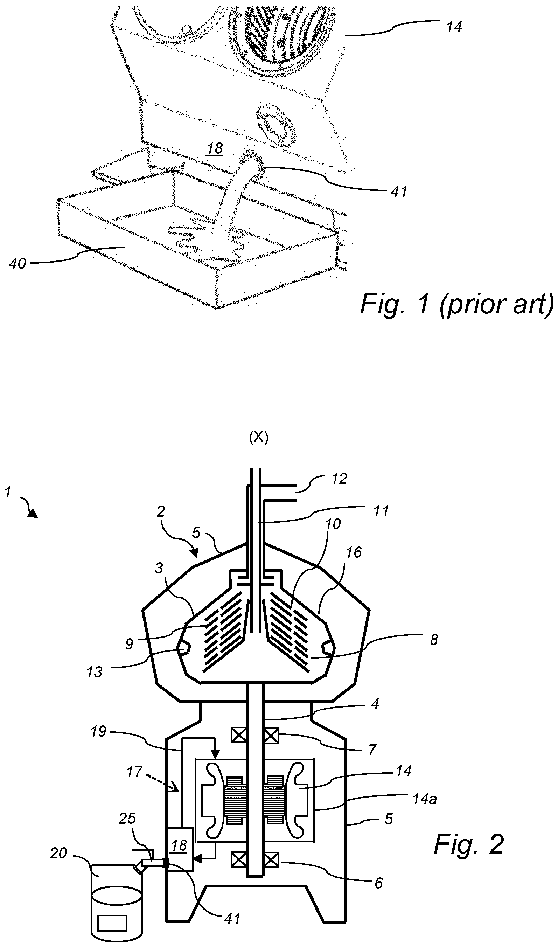

Fig. 1 schematically shows a prior art solution on how oil is drained from the drive motor 14 of a centrifugal separator. The lower part of the drive motor 14 comprises an oil tank 18 (or oil sump, oil reservoir etc), from which lubricating oil for the drive motor 14 is to be drained. An oil plug (not shown) covering the drain hole 41 is removed and lubricating oil is allowed to drain into a tray that is placed under the drain hole 41. However, in installation of a centrifugal separator usually contains a plurality of pipes and cables, leading to a limited space within which an operator may place and handle the tray. With such an open tray solution, there is also the risk of spillage on the floor and risk of oil fumes escaping into the premises in which the separator is arranged. The open tray solution of the prior art usually requires attention by the operator or service engineer draining the lubricating oil, and there is further no information on what to do with the collected oil afterwards.

Fig. 2 schematically shows an oil drain assembly 1 according to the present disclosure used for draining lubricating oil from the drive motor from the centrifugal separator 2 that overcomes at least some of the drawbacks discussed in relation to the prior art solution in Fig. 1.

In this example, the centrifugal separator 2 of the oil drain assembly 1 is a high-speed centrifugal separator comprising centrifuge bowl 3 and spindle 4 arranged for rotation about a vertical axis of rotation (X). The spindle 4 onto which the bowl 3 is mounted is supported in a stationary frame 5 of the centrifugal separator in a bottom bearing 6 and a top bearing 7.

The centrifuge bowl 3 forms within itself a separation chamber 8 in which centrifugal separation of a liquid feed mixture takes place during operation.

The separation chamber 8 is provided with a stack of frustoconical separation discs 9 in order to achieve effective separation of the liquid mixture. These discs 9 are fitted centrally and coaxially with the centrifuge bowl 3 and comprise holes which form channels 10 for axial flow of liquid when the separation discs 9 are fitted in the centrifuge bowl 3. Liquid feed mixture to be separated is fed from the top via stationary inlet pipe 11 extending down into the centrifuge bowl 3.

The centrifuge bowl 3 has extending from it a liquid light phase outlet 12 for a clean liquid phase separated from the polluted cleaning liquid. The liquid light phase outlet 12 is extending through the frame 5 at the top of the separator. In this example, the separator 2 has only one liquid outlet 12, but the separator 2 could also comprise further liquid outlets for liquid phases of other densities than the density of the liquid withdrawn via outlet 12. This depends on the liquid material that is to be processed. In such cases, any liquid of higher density may instead be forced out through a further liquid outlet (not shown) that is at a radial distance that is larger than the radial level of outlet 12. Separated solids is discharged via a set of sludge outlets 13 in the form of intermittently openable outlets arranged at the periphery of the centrifuge bowl 3. In other examples, separated solids may continuously be ejected from the centrifuge bowl.

The centrifugal separator 1 is further provided with a drive motor 14 arranged within the stationary frame 5. This motor 14 may for example be an electric motor that is arranged to transmit driving torque to the spindle 4 and hence to the centrifuge bowl 3. As an alternative, the drive motor 14 may be connected to the spindle 4 by transmission means such as drive belts or the like. The drive motor 14 is lubricated via lubricating oil from an oil tank 18, which is arranged at a lower part of the stationary frame. Lubricating oil from oil tank 18 is transported to the parts of the drive motor 14 that are to be lubricated and back again via lubrication pipes 17. The oil tank may be part of a motor housing 14a surrounding the drive motor or be arranged outside of the motor housing 14a.

After a certain number of operating hours the lubricating oil needs to be replaced and thus drained from the drive motor 14 via a drain hole 41 of the oil tank 18. For this, a connecting portion 25 and a container 20 for storing drained lubricating oil is used. Connecting portion 25 is mounted to the drain hole 41 and lubricating oil is allowed to drain, via the connecting portion 25, down to the container 20. The connecting portion 25 is arranged to be left mounted in the drain hole 41, and due to a valve member 28 of the connecting portion, oil may easily be drained in future replacements of lubricating oil.

The size or volume of the container is matched to the volume of the oil to be drained, i.e. to the volume of the oil tank 18. As an example, the oil tank 18 may have a volume of V1, and the volume of the container 20 may have a volume V2 that is slightly larger than this, such as a volume of V2, wherein V2 is between V1 and 1.5*V1. Thus, the container 20 may be provided in a variety of volumes to match the type of drive motor 14, or more specifically, the size of the oil tank 18. In this way, space is saved, i.e. there is no unnecessary dead volumes in large containers for drained lubricating oils.

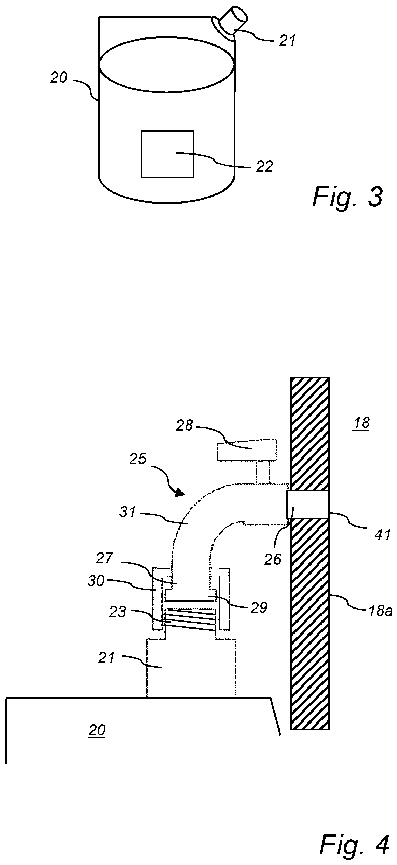

Fig. 3 shows some more detail of the container 20 that may be used. The container 20 comprises an oil inlet 21. This oil inlet 21 is configured to be directly connected to the connecting portion 25, without any intermediate tubes or the like. In this example, the oil inlet 21 forms the only inlet or outlet of the container 20.

The container 20 is in this example a flexible bag, more specifically in the form of a stand-up pouch. In this way, the container 20 takes little storage space when empty and may stand on its own during the evacuation of the lubricating oil from oil tank 18 down to the container 20.

The container 20 is further transparent so that the level of oil is visible from the outside. Further, this allows for an initial visual inspection of the quality of the drained oil, simplifying further processing and cleaning of the drained oil. The stand-up pouch has further a label 22. This may be used to indicate the type of oil drained and may as an alternative or complement contain instructions on how or where to recycle the drained lubricating oil.

The stand-up pouch 20 allows for convenient draining from oil tanks 18 that are arranged rather low compared to the ground level on which the centrifugal separator is arranged during operation, since it may stand on its own and may be directly connected via the oil inlet 21 to the connecting portion 25. As an example, the oil drain 41 of the oil tank 18 may be arranged less than 1.0 m, such as less 0.5 m, above the ground level on which the centrifugal separator 2 is arranged to operate.

Fig. 4 shows some more details of a connecting portion 25, and how it is connected to both the drain hole 41 of the oil tank 18 and to the oil inlet 23 of the container 20.

The connecting portion 25 comprises a first end 26 adapted for connection to the drain hole 41 of the drive motor 14. The first end 26 may be screwed into od pressed into the drain hole 21. The connection between drain hole 41 and the first end 26 is strong enough so that the connecting portion may be permanently mounted into the drain hole 41. In this example, the first end 26 extend all the way through the outer wall 18a of the oil tank 18.

The connecting portion 25 has further a second end 27 adapted for being directly connected to the oil inlet 21 of the container 20. In this example, the oil inlet 21 is a threaded inlet, i.e. comprises outer threads 23, and the second end 27 comprises a coupling nut 30 having complementary threads on it inner surface. The coupling nut may move along the extension of the second end 27 down to a stop flange 29 of the second end portion 27. Thus, when fastening the container 20 directly to the connecting portion 25, the oil inlet 21 of the container 20 may abut the end of the second end 27 of the connecting portion 25, and the coupling nut 30 may be screwed onto the threads 23 of the oil inlet, thereby firmly securing the container to the connecting portion 25.

The connecting portion 25 further comprises a middle portion 31 arranged between the first 26 and second 27 ends. The middle portion is arranged such that when mounted to the drain hole 41, the first end is arranged at a vertical position that is higher than the partition of the second end27. Thereby, oil may easily be drained from first 26 to second 27 portion. In this example, the middle portion has a bent shape. Arranged in the middle portion 31 is a valve member 28 arranged for regulating the flow of lubricating oil within the connecting portion. Thus in its closed position, lubricating oil may be completely stopped from leaving the oil tank 18 via the connecting portion 25. The valve member 28 may thus be used to close the draining from the oil tank when the connecting portion 25 has been permanently mounted to the drain hole 41. As an example, the valve member 28 may be a ball valve.

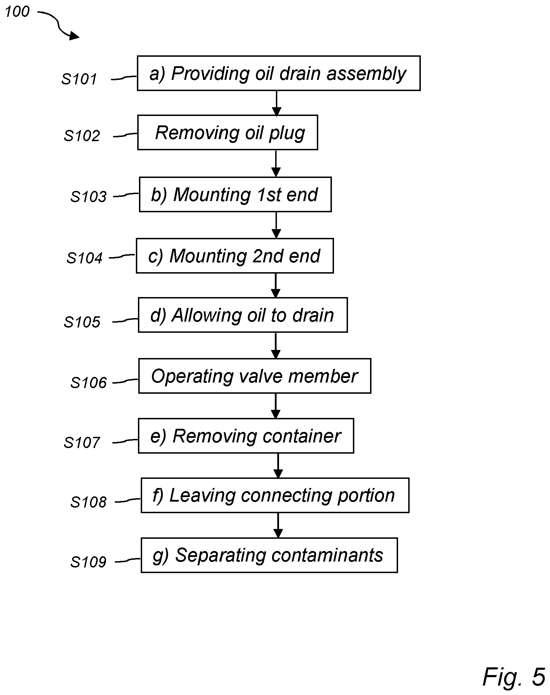

Fig. 5 illustrates the different methods steps of an example of a method 100 for draining lubricating oil. The method 100 comprises the steps of a) of providing S101 an oil drain assembly 1 as discussed in Figs 2-4 above, step b) of mounting S103 the first end 26 of the connecting portion 25 to the drain hole 41 of the drive motor 14 and step c) of mounting S104 the second end 27 of the connecting portion 25 to the oil inlet 21 of the container 20. Step a) may thus comprise first removing replacing an oil plug in the drain hole 41 with the connecting portion 25.

The method 100 further comprises step d) of allowing S105 oil to be drained from the drive motor 14 to the container 20. This thus comprises operating S106 the valve member 28 to a closed state during the mounting of step c) and in an open state while draining oil in step d).

After enough oil has been drained, the method 100 comprises a step e) of removing S107 the container 20 from the connecting portion 25 and step f) of leaving S108 the connecting portion 25 mounted to the drain hole 41 during further use of the centrifugal separator 2. The valve member 28 may thus be operated back to a closed state before the step of removing S107 in step e).

The oil drained to the container 20 may further be cleaned. Thus, the method 100 may further comprise a step g) of separating S109 contaminants from the oil drained to the container 20 in a centrifugal separator, such as in a high-speed centrifugal separator having a disc stack.

In the above, the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An oil drain assembly (1) for draining lubricating oil from a centrifugal separator (2), comprising
- a centrifugal separator (2) comprising a drive motor (14); wherein
said drive motor (14) comprises a drain hole (41) for lubricating oil;
- a container (20) for storing drained lubricating oil comprising an oil inlet (21); and
- a connecting portion (25) comprising a first end (26) adapted for connection to the drain hole (41) of said drive motor (14); a second end (27) adapted for being directly connected to the oil inlet (21) of said container (20) and a valve member (28) arranged between the first (26) and second (27) end for regulating the flow of lubricating oil within said connecting portion (25);
wherein said connecting portion (25) is arranged for being permanently connected to said drain hole (41) and directly connected to said container (20).

2. An oil drain assembly (1) according to claim 1, wherein the centrifugal separator (2) is a decanter centrifuge or a high-speed centrifugal separator.

3. An oil drain assembly (1) according to claim 1 or 2, wherein said oil inlet (21) is a threaded inlet and wherein said connecting portion (25) comprises a coupling nut at said second end (27) for engaging with said threaded inlet.

4. An oil drain assembly (1) according to any previous claim, wherein said container (20) is a flexible bag.

5. An oil drain assembly (1) according to claim 4, wherein said flexible bag (20) is a stand-up pouch.

6. An oil drain assembly (1) according to any previous claim, wherein said container (20) is a transparent container (20).

7. An oil drain assembly (1) according to any previous claim, wherein the valve member (28) comprises a ball valve.

8. An oil drain assembly (1) according to any previous claim, wherein said drain hole (41) of the drive motor (14) is connected to an oil tank (18) of the drive motor (14) having a volume of V1, and wherein the volume of the container (20) has a volume of V2, wherein V2 is between V1 and 1.5*V1.

9. An oil drain assembly (1) according to any previous claim, wherein said drain hole (41) is arranged less than 1.0 m above the ground level on which the centrifugal separator (2) is arranged to operate.

10. A method (100) for draining lubricating oil comprising the steps of:
a) providing (S101) an oil drain assembly (1) according to any one of claims 1-9;
b) mounting (S103) the first end (26) of the connecting portion (25) to the drain hole (41) of the drive motor (14);
c) mounting (S104) the second end (27) of the connecting portion (25) to the oil inlet (21) of the container (20);
d) allowing (S105) oil to be drained from the drive motor (14) to the container (20);
e) removing (S107) the container (20) from the connecting portion (25); and
f) leaving (S108) the connecting portion (25) mounted to the drain hole (41) during further use of the centrifugal separator (2).

11. A method (100) according to claim 10, wherein step d) of allowing (S105) oil to be drained from the drive motor (14) to the container (20) comprises operating (S106) the valve member (28) to a closed state during the mounting of step c), to an open state while draining oil in step d) and back to a closed state before the step of removing (S107) in step e).

12. A method (100) according to any one of claims 10 or 11, wherein step a) of providing (S101) an oil drain assembly (1) further comprises removing (S102) an oil plug covering the drain hole (41) of the drive motor (14).

13. A method (100) according to any one of claims 10-12, further comprising a step g) of separating (S109) contaminants from the oil drained to said container (20) in a centrifugal separator.
